# EUROPEAN PATENT SPECIFICATION

(11) **EP 3 540 186 B1**
(45) Date of publication and mention of the grant of the patent: **24.11.2021**
(21) Application number: 19163261.1
(22) Date of filing: 15.03.2019
(51) Int. Cl.: F01M 13/00, F02M 35/10, F02M 25/06, F16L 53/35, F01M 13/04

(54) **BLOWBY HEATER**
BLOWBY-HEIZUNG
RÉCHAUFFAGE DE GAZ DE CARTER

(30) Priority: 16.03.2018 LU 100736; 17.07.2018 LU 100875
(43) Date of publication of application: 18.09.2019
(73) Proprietor: Cebi Luxembourg S.A., 7327 Steinsel (LU)
(72) Inventor: Graziotin, Francis, L-7327 Steinsel (LU)
(74) Representative: Office Freylinger

(56) References cited:
- EP-A1- 1 375 999
- EP-A1- 1 674 678
- EP-A2- 2 982 837
- WO-A1-2018/015383
- DE-A1-102011 056 144
- JP-A- 2017 078 394
- US-A1- 2015 139 632

## Description

### FIELD OF THE INVENTION

The present invention generally relates to the field of crankcase breathing. In particular the invention relates to a heater system or "blowby heater" of a crankcase fluid.

### BACKGROUND OF THE INVENTION

"Blowby heaters" (also spelled "Blow-by") are devices which can be used in recent automobile vehicles with combustion engines in order to prevent leakages. During operation of the combustion engine, "blowby" gazes can leak between the cylinders and the combustion chambers and accumulate as blowby fluid in the crankcase of the combustion engine. This blowby fluid generally contains a mixture of gas, oil, water and other combustion elements and its accumulation can generate leakage through the crankcase. Recent combustion engines are constructed to re-inject said blowby fluid into the combustion engine, for example via the air inlet into the engine. The blowby heater can be used to heat the fluid as it is circulating from the crankcase towards the air inlet in order to improve the fluid flow, in particular in heavy winter conditions in which the blowby heater prevents the water contained in the fluid from freezing.

A blowby heater well known in the art comprises a heater element such as a Positive Temperature Coefficient (PTC) element as a heating source. The PTC generates heat when crossed by an electrical current and it presents a variable resistance with its temperature for a heating power auto regulation. Misplacement of elements of the blowby heater in case of shock and contamination from the environment can, separately or in combination, lead to short circuit and eventually cause a fire.

A conventional design of blowby heater system for a fluid comprises a heater plate, e.g. a PTC plate, between two contact plates each equipped with an electrical contact leg in order to transfer electrical current through the heater plate. One of the contact plates rests on the wall of the conduit carrying the fluid for heat energy transfer. This assembly of heater plate and contact plates on the conduit is overmolded with plastic to form a sleeve-shaped body surrounding the conduit. The heater assembly is thus covered with plastic, only the contact legs protrude through the body, ready for connection with a connector. This conventional design is somewhat cumbersome in that it requires pre-assembling the heater plate with the contact members on the tube before overmolding, running the risk of misplacement and hence of short-circuits or fire, as evoked above.

WO 2018/015383 A1 discloses an alternative design of Blowby heater, wherein the plastic body surrounding the conduit comprises a heater container having a closed bottom forming a transfer wall in contact with the conduit, the heater container further having an upper aperture that is closed by a connector. The heater assembly is formed as a heater stack including an upper contact plate, a heater plate (PTC) and a lower contact plate resting against the transfer wall. The positioning of the heater plate is ensured by means of protrusions extending from the transfer wall and engaging the peripheral edge of the heater plate in order to maintain the heater plate on one contact zone of the conductive plate at distance with one electrical connection zone of the conductive plate situated in front of said portion of the peripheral edge. Such blowby heater has several benefits. The heater container forms a sealed cavity in which heater stack is protected from dust and fluids. At assembly, the heater stack can be put in place in the cavity, ensuring proper positioning and avoiding the need for extra tests. The positioning protrusions ensure a proper positioning at installation and in use. A shortcoming of this otherwise well performing design is its somewhat slow response time (time required to reach a predetermined temperature of the conduit) due to the plastic transfer wall closing the cavity.

A further design of Blowby heater is known from DE 10 2011 056 144. It comprises a plastic body overmoulded on the metal conduit and defines an internal chamber positioned over a flat support surface of the conduit. The PTC heater plate is located in the internal chamber with a pair of contact elements arranged above and below the PTC. The internal chamber is closed towards the exterior and the contact elements are passed through the outer wall of the plastic body. A sealing element is provided at the inner periphery of the internal cavity, at the interface with the metal conduit. A thin intermediate foil may be arranged between the lower contact element and the metal conduit to compensate for unevenness of the flat surface; the foil may further be electrically insulating, and may particularly be a plastic foil, a layer of paint or ceramics.

### OBJECT OF THE INVENTION

The object of the present invention is to provide a solution which overcomes the disadvantages of the prior art. In particular, the object of the invention is to provide a heater system that is of simple and robust design, namely reducing risks of short circuits, with a good response time.

This object is achieved by a heater device as claimed in claim 1. Embodiments of the invention are recited in the dependent claims.

### SUMMARY OF THE INVENTION

The present invention concerns a heater device, in particular for a crankcase fluid, comprising a conduit for the fluid to be heated; and a plastic body with a passage defining an inner space in which the conduit is accommodated. The body comprises a heater container defining a cavity in which a heater stack is arranged. In use, the cavity is sealably closed whereby the heater stack is protected from dust and vapors. The cavity has an outer region with an aperture allowing insertion of, and access to, the heater stack. The aperture is closed, preferably in a sealed manner, by a removable connector. The heater stack is arranged in the inner region of the cavity in thermal transfer with the conduit to heat-up the latter when energized by means of power provided through poles integrated in the connector.

According to the invention, the heater stack comprises a heat transfer member arranged in an orifice of said heater container to be in direct contact with said conduit (while closing said orifice). A seal ring is arranged at the interface between the heat transfer member and the orifice, whereby the heat transfer member sealably closes the orifice, and the cavity is sealably closed.

The present heater device presents the advantages of a closed and sealed heater container chamber as known e.g. from WO 2018/015383, however with an improved response time thanks to the heat transfer member sealably mounted in an orifice at the bottom of the plate. The heater stack is thereby in direct contact with the conduit, improving the heat-up response time (time required to heat the conduit up to a predetermined temperature). First experiments have shown a reduction in response time in the order of 30 to 50%. The present design is further interesting in terms of energy savings, since the current evolution follows the expected plateau evolution, avoiding peaks that were due to the difficulty of dissipating heat through a plastic end wall.

Furthermore, the use of a heater body with heater container permits proper mounting of the heater stack therein, since the heater stack is inserted in the cavity after preparing the conduit and plastic body assembly. The heater container further provides protection against dust and fluids. This is of advantage in terms of simplicity and robustness of design, namely since it reduces risks of short circuits.

As will be understood, for improved heat transfer to the conduit the transfer member is advantageously made from a material having a better thermal conductivity than the plastic body. The transfer member may generally be made from metal, in particular from aluminum or aluminum alloy, copper or copper alloy, or brass. Metals/alloys having good thermal conductivity are preferred.

Also for improved heat transfer the conduit has a flattened wall portion and the heat transfer member is in contact therewith.

The term "heater stack" is used herein to refer to the piled-up assembly of the heater plate and heat transfer member, possibly with other plates such as e.g. a contact plate(s).

The heater plate is the heating source of the heater stack. The heater plate may be any appropriate heating element providing heating by the Joule effect. Preferably, the heater plate is made from a Positive Temperature Coefficient (PTC) material.

The heater stack includes a cup-shaped heat transfer member and the heater plate is located inside the cup-shape heat transfer member. The heat transfer member has a bottom wall in contact with the conduit and an outwardly bent upper edge. The seal ring is arranged around the heat transfer member below the upper edge. Preferably, the orifice is surrounded by an annular sealing surface configured for receiving the seal ring when the heat transfer member is mounted therein, the seal ring being compressed between the sealing surface and the upper edge, in order to cause radial expansion of the seal ring against an annular wall surrounding the sealing surface.

In this embodiment, a first spring provides an electrical link between a first pole of the connector and the heater stack, while pressing the latter towards the conduit. A second spring is electrically linked with a second pole of the connector and presses against the outwardly bent upper edge cup-shaped heat transfer member without touching the heater plate.

The body is a plastic part that can be independently manufactured by molding. Any appropriate material for the plastic body may be used, e.g. PA (in particular PA66, PPA, or PBT, with or without hydrolysis treatment and preferably with glass fiber (about 30%). Alternatively the body may be overmolded on said conduit. In both cases, of course, the body is provided with the heater container that is integral therewith. Also the orifice at the bottom of the heater cavity is provided at the time of molding/overmolding.

According to another aspect, the invention also concerns a method of manufacturing a heater device as claimed in claim 10. This method particularly uses a heater device design as disclosed herein.

### BRIEF DESCRIPTION OF THE DRAWINGS

Further details and advantages of the present invention will be apparent from the following detailed description of not limiting embodiments with reference to the attached drawing, wherein:
Figure 1: is a perspective view of a heater device not forming part of the invention;
Figure 2: is an exploded view of the heater device of Fig.1;
Figure 3: is a cross-sectional view of the heater device of Fig.1;
Figure 4: is an exploded view of an embodiment of heater device according to the invention;
Figure 5: is a cross-sectional view of the heater device according to the embodiment of Fig.4;
Figure 6: is an exploded view of a another embodiment of the heater device according to the invention; and
Figure 7: is a cross-sectional view of the heater device according to the embodiment of Fig.6.

### DETAILED DESCRIPTION OF PREFERRED EMBODIMENTS

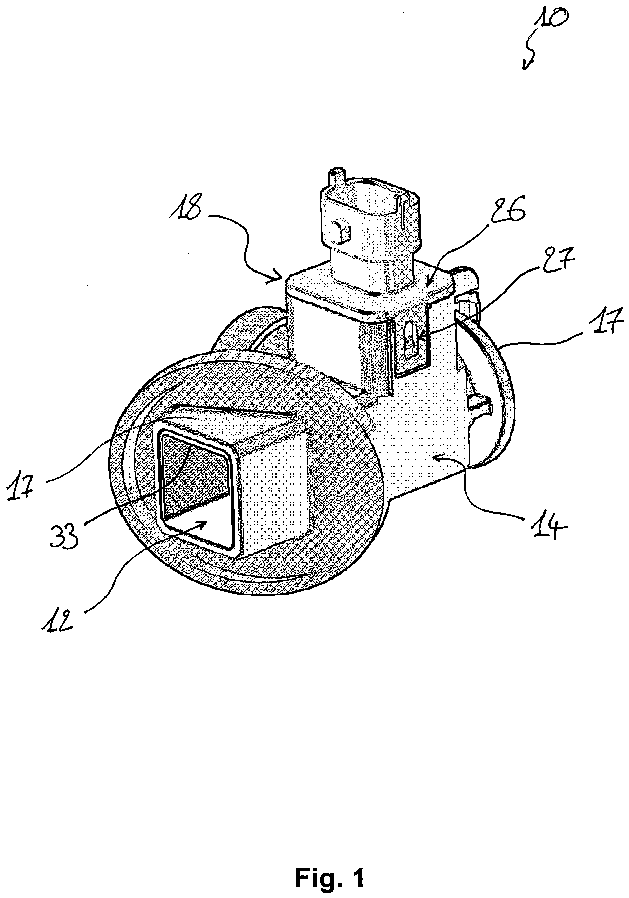

An embodiment of the present heater device 10 (not forming part of the invention) is shown in Figs. 1 to 3. The heater device 10 has been particularly designed for heating up blowby fluid of internal combustion engines and is therefore referred to as "blowby heater" in the rest of the description. Blowby heater 10 comprises a conduit 12 for the blowby fluid to be heated, and a plastic body 14 with an inner passage in which the conduit 12 is accommodated. The body 14 preferably completely surrounds the conduit, forming a kind of outer sheeting or envelope.

Such blowby heater 10 is generally inserted in a blowby fluid return line, in which it is connected by its opposite connection portions 17. The skilled person will understand that conduit 12 may have various dimensions, shapes and cross-sections.

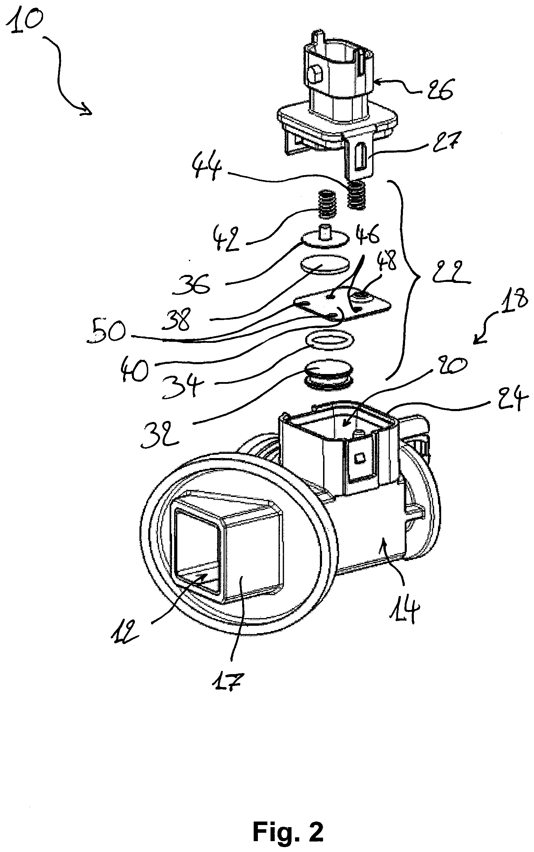

The body 14 as shown in Fig. 2 comprises a heater container 18 at the periphery of the conduit that extends transversally/radially. The heater container 18 defines a cavity 20 in which a heater stack 22 is arranged.

The cavity 20 has an aperture 24 by which it is open transversally (outwardly with respect to the internal passage). A connector 26 is attached, preferably removably, to the body 14 and is adapted to close the aperture 24 of the heater container 18 in order to close and preferably seal the cavity against dust and fluids/vapors. Connector 26 may be attached to the heater container by any suitable releasable connection means 27, like for example a ratchet mechanism, or a snap locking mechanism as shown in Fig. 1. Additionally or alternatively, the connector is ultrasonically welded to the body, providing an efficient sealing of the cavity. However a seal ring could be used. The connector 26 and/or the body 14 may be made from any appropriate plastic material, e.g. PBT or PA.

It may be noted that such a plastic body with integrated heater container has the advantage of allowing mounting of the heater stack when the plastic body is already on the conduit. The heater stack can be inserted and mounted in the cavity via aperture 24, which also permits further access to the heater stack where necessary. As it will be understood, such plastic body with heater container can be manufactured as a molded part that is fitted over the conduit 12 (and maintained by way of press-fit, shape-fit, etc.) or may be overmolded on the conduit 12.

The heater stack 22 is arranged in the cavity 20. It is selectively energized by means of power provided through poles 28 (electric contacts) integrated in the connector 26. The heater stack 22 transforms the electric energy provided through the connector into heat that is transferred to the conduit 12 in order to heat it up.

As will be described in more detail below, the heater stack 22 comprises at least a heater plate 38, forming the heat source of the blowby heater 10, and a heat transfer plate 32. Depending on the embodiments, the heater stack may comprise other intervening plates. The heater container 18 comprises an orifice 30 disposed in an end wall 31 closing the bottom of the container 18 at the interface between the cavity 20 and the conduit 12. In that manner the orifice 30 provides a passageway from the cavity 20 to the conduit 12. As it will be understood, the size of the orifice in the end wall 31 may vary depending on the embodiments.

The heat transfer plate 32 of the heater stack 22 is arranged in the orifice 30 of the heater container 18. The heat transfer plate 32 is in direct contact with the conduit 12 and closes the orifice 30. The heat transfer plate 32 is made from a material having a better thermal conductivity than the plastic body. For example, the transfer plate may be made from a metal, in particular from aluminum or aluminum alloy, copper or copper alloy, or brass. Accordingly, the material for the heat transfer plate 32 may be of at least 100 W/(m.K), and possibly about 120-160 W/(m.K) for aluminum or brass, as high as 280 to 380 W/(m.K) for copper and copper alloys. For comparison purposes, the thermal conductivity of plastic materials like e.g. PA66 GF30 or PBT GF30 is less than 0.5 W/(m.K). The material of the transfer plate may typically be matched with that of the conduit.

When the heater stack 22 is energized to generate heat, the transfer plate 32 receives this energy which is transferred by direct contact to the conduit 12. Such design with a sealingly mounted transfer plate gives the advantages of a sealed heater cavity similar to WO 2018/015383, however with improved response time since heat is transferred through the heat transfer member and not though a plastic wall. Heat-up time can be reduced by up to 50%.

For an improved contact, the conduit 12 advantageously comprises a flattened wall portion 33 and the heat transfer plate 32 lies against this flattened wall portion 33.

A seal ring 34 is arranged at the interface between the heat transfer plate 32 and the orifice 30 to close sealably close the orifice 30. The heat transfer plate 32 and seal ring 34 seals the bottom side of the cavity and prevent dust and vapor to enter the cavity from the orifice 30. The seal ring 34 is preferably a plastic ring made for example of FKM or AEM, or of any suitable material.

In this embodiment, the transfer plate 32 has a thickened disk shape and comprises a circumferential groove 35 in its peripheral edge, in which the seal ring 34 is arranged.

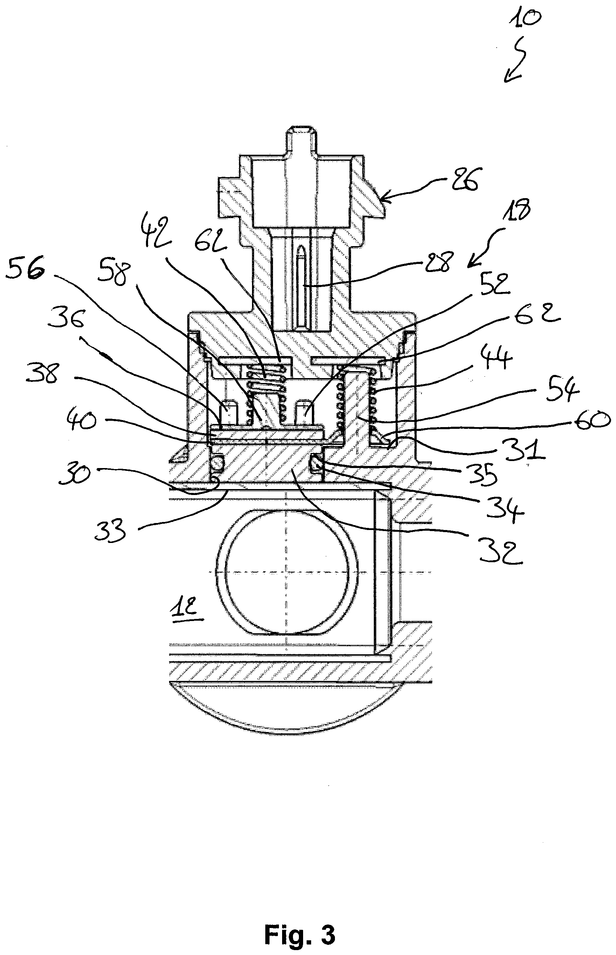

In the embodiment of Figs. 2 and 3, the heater stack 22 comprises a contact plate 36, the heater plate 38, a first contact plate 40, and the heat transfer plate 32 at the bottom.

As the heat source, the heater plate 38 is a heating element that transforms electric energy into heat by the Joule effect. Conventionally, the heater plate 38 may be made from PTC conductive material. The heater plate is here shaped as a disk, but other shapes can be used.

When traversed by electrical current, the heater plate 38 will generate heat that is taken up by the first contact plate 40 and radiated therefrom to the heat transfer plate 32 to be finally transferred to the conduit 12.

During assembly of the heater stack 22 in the cavity 20, the heat transfer plate 32 and the seal ring 34 are first installed in the orifice 30 of the container 18 closing the orifice 30, such that the transfer plate 32 is in direct contact with the conduit. The other elements of the heater stack 22 may then be piled up on top of the transfer plate 32.

Electrical connection of the heater stack is achieved by means of a first helicoidal contact spring 42 on top of the contact plate 36 and a second helicoidal contact spring 44 on top of the first contact plate 40.

The contact springs 42, 44 are configured to press the elements of the heater stack 18 together, and thus maintain a physical contact between them. As shown in Fig. 3, when the connector 26 closes the heater container 18, the contact springs 42, 44 are compressed between the connector 36 and respectively the contact plate 36 and the first contact plate 40.

First contact plate 40 is advantageously designed to ensure a simple and reliable mounting of the heater plate, providing safe positioning and electrical connections. The first contact plate 40 is typically made from a metal having good electric conductivity (Al or Cu or alloys thereof), and hence generally exhibiting good thermal conductivity. As shown in Fig. 2, the first contact plate 40 comprises two principal openings 46, two secondary openings 50 opposite the secondary openings, and finally one auxiliary opening 48. It may be noticed that the auxiliary opening 48 has a larger diameter than the other openings.

Turning to Fig.3, two principal protrusions 52, here two cylindrical pins, extend from the end wall 31 (through principal openings 46) and are arranged to engage a portion of a peripheral edge of the heater plate 38 in assembled position, in order to maintain the heater plate 38 on a contact zone of the first contact plate 40 at distance from an electrical connection zone on the first contact plate 40 situated in front of the portion of the peripheral edge.

The end wall 31 may further comprise two secondary protrusions 56 adapted to cooperate with the two secondary openings 50, and one auxiliary protrusion 54 adapted to cooperate with the auxiliary opening 48.

Fig. 3 shows only one principal protrusion 52 and one secondary protrusion 56, the other protrusions are disposed symmetrically relative to the plane of the cross-section of Fig. 3.

In order to position the first contact plate 40, the plate 40 is arranged in the heater container 18 such that the principal, auxiliary and secondary protrusions 46, 48, 50, from the end wall 31, are respectively extending through the principal, auxiliary and secondary openings 52, 54, 56 of the first contact plate 40. Once in place, the first contact plate 40 covers the heat transfer plate 32 and at least part of the end wall 31.

After positioning the first contact plate 40, the heater plate 38 is disposed on top of the latter in between the primary and secondary protrusions 52, 56. It should be noted that the dimensions of the heater plate 38 are predetermined in order to fit between the protrusions, preferably in contact with the protrusions.

The contact plate 36 is then disposed on top of the heater plate 38. In order to ease the positioning, the dimensions of the contact plate are roughly the same as the dimensions of the heater plate.

The contact plate 36 further comprises a nipple 58 that extends from the center of the contact plate 24. The first contact spring 42 is disposed on top of the contact plate 36 and cooperates with the nipple 58.

The first and second contact springs 42, 44 are positioned in the cavity as follows. The second spring 42 engages with the auxiliary protrusion 40 provided in the wall 31 that passes through the first contact plate 40. In the present embodiment, the auxiliary opening 48 in the first contact plate 40 comprises a raised edge 60 forming an electrical connection zone and the second spring 44 engages with the auxiliary protrusion 54 resting on the raised edge 60.

The first and second springs 42 and 44 are connected to corresponding strips 62 in the connector for power supply. The electrical power is supplied to the springs via a pair of wires (not shown) arriving at the connector 14. Heating will occur when a voltage is applied to the heater contact strips via the wires.

In the final assembly stage, the connector 26 is mounted on the aperture to close the cavity 20 of the heater container 18.

When the connector 26 is fixed on the heater container, the first spring 42 is electrically linked with the first connector pole and presses the elements of the heater stack 22 toward the conduit 12. The second spring 44 is electrically linked with the second connector pole and presses against the electrical connection zone of the first contact plate 40.

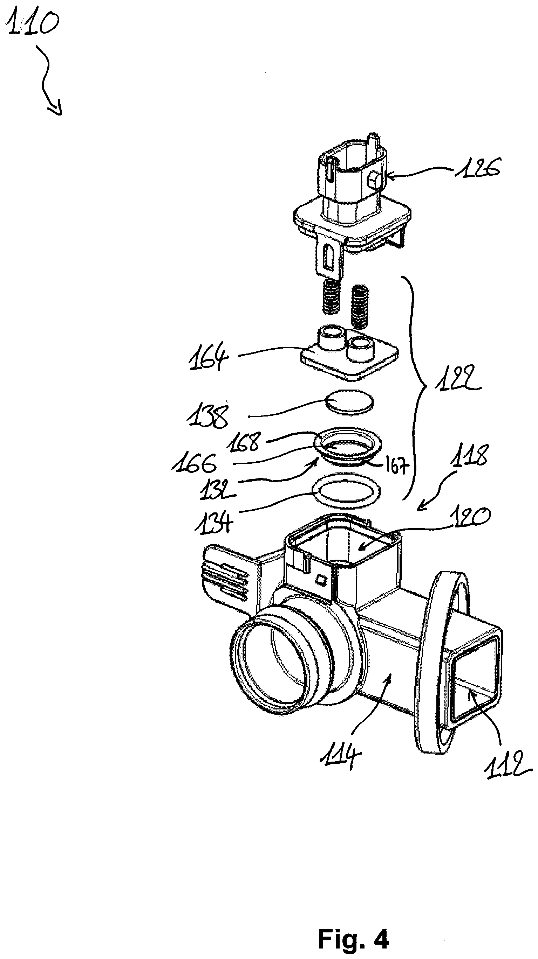

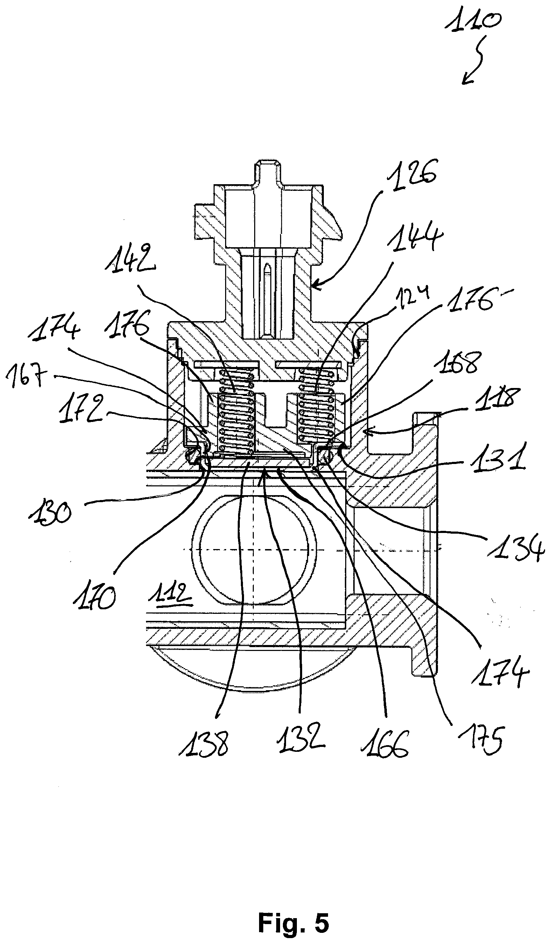

An embodiment of blowby heater 100, part of the present inventive concept, will now be described with reference to Figs. 4 and 5. This embodiment essentially differs from the previous one by the design of the heater stack. Same or alike elements will therefore be designated by same reference signs, augmented by 100.

In Fig.4 one will recognize the blowby heater 110 with the conduit 112 accommodated in the inner passage of plastic body 114.

The body 114 comprises a heater container 118 defining a cavity for a heater stack 122.

The heater stack 122 here comprises a cup-shaped heat transfer member 132 and a heater plate 138. If desirable, a contact plate may be installed on top of the heater plate.

The heat transfer plate 132 is here shaped as a circular cup comprising a bottom wall (surface) 166 surrounded by a peripheral wall 167 ending with an outwardly bent upper edge 168.

As shown in Fig. 5, the heat transfer member 132 is mounted in an orifice 130 of the heater container 118 such that its bottom wall 166 is in contact with conduit 112.

The orifice 130 here extends over most of the cross-section of the heater container. Orifice 130 is defined by an inner bottom border 131, lying on conduit 112. More precisely the orifice 130 is surrounded by an annular sealing surface 170 internally located on said bottom border 131 and configured for receiving a corresponding seal ring 134 when the heat transfer member 132 is mounted therein. The internal bottom border is actually partially curve-shaped so that the sealing surface 170 is further outwardly limited by a raised annular wall 172 surrounding the latter. In the assembled state, the cup-shaped transfer member 132 with seal ring 134 sealably close the orifice 130 at the bottom side of the cavity.

The elastic seal ring 134 is typically positioned on the outer periphery of the cup-shaped transfer member 132, below the outwardly bend edge 168. Upon assembly of the transfer member 132, the seal ring 134 will be compressed by the edge 168 against the sealing surface 170, causing radial expansion of the seal ring 134 further compressed against annular wall 172 and the wall 167 of the transfer member.

It will be appreciated that this design provides a very convenient and efficient mounting, with a quality sealing of the cavity bottom against vapors/fluids. The cup-shaped transfer member 132 holds the PCT-heater plate 138 in a safe manner and provides electric and thermal connection, the edge 168 acting as contact terminal for a spring. At the same time, the cup-shaped transfer member 132 holds the seal 134, facilitating its positioning and resulting in spontaneous compression thereof when mounted in the orifice 130. Furthermore, the seal ring being locked in place between the wall 167, the edge 168 and the orifice 130, it cannot move, ensuring a high quality seal.

On the side of the bottom wall 166 that is not in contact with the conduit 112, the heater plate 138 comprises an annular slanted surface 174 surrounding the bottom wall 166.

The heater plate 138 is received inside the cup-shaped transfer member 132, resting on top the bottom wall 166 shown in Fig. 5. The heater plate 138 is located inside the cup-shaped heat transfer plate 132. The annular slanted surface 174 is inside member 132 at the transition between wall 167 and bottom 166 to act as a centering means for the heater plate 138.

A pair of contact springs 142 and 144 is used to provide electric links between the connector 126 and heater stack 122. These are maintained in spaced relationship by a guide element 164 on top of the heater stack 122.

The guide element 164 comprises a positioning plate 175 made from dielectric material, e.g. polymer. The dimensions of the positioning plate 175 preferably match the internal cross-section of the heater cavity. The guide element 164 further comprises two guiding cylinders 176, 176' defining two holes on the surface of the positioning plate 175. The dimensions of the guiding cylinders 176, 176' are adapted to the dimensions of the first and second spring 142, 144.

Once the guide element 164 is in place, the first and second springs 142, 144 are inserted into the guiding cylinders 176. One guiding cylinder 176 positions the first spring 142 such that it presses the heater stack 122 from the top of the heater plate 138 towards the conduit 112. The other guiding cylinder 176' positions the second spring 144 such that it presses against the outwardly bent upper edge 168 of the cup-shaped heat transfer member 132, however without touching the heater plate 138. It may be noticed that guide element 164 comprises below plate 175 a disk shaped locating portion 177 having a diameter corresponding to the inner diameter of the cup member 132. The locating portion 177 rests against heater plate 138 and has a height corresponding to the difference between the cup depth and the heater plate thickness. Locating portion 177 is traversed by spring 142, but not by spring 144, thus avoiding short-cuts with the heater plate. Here again the connector 126 sealingly closes the cavity 120 and exerts the compressive force on the springs 142 and 144.

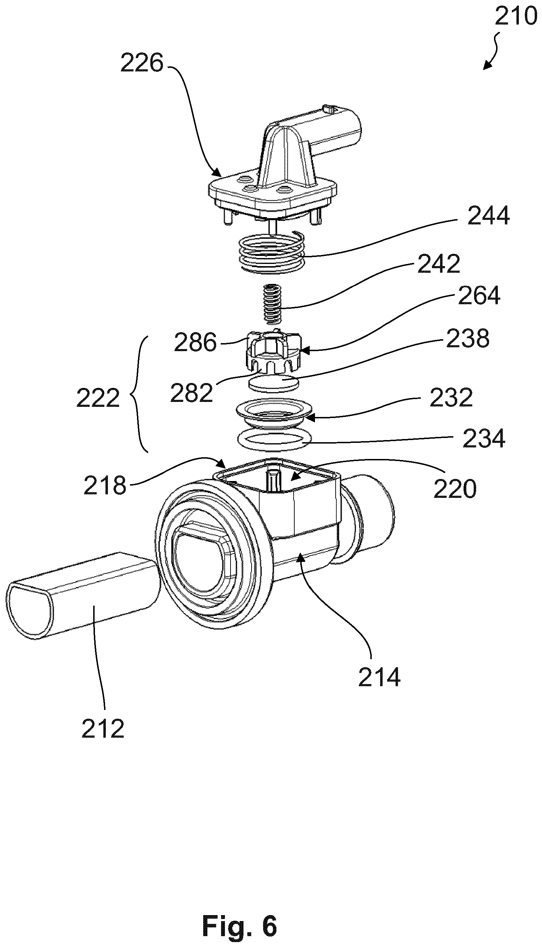

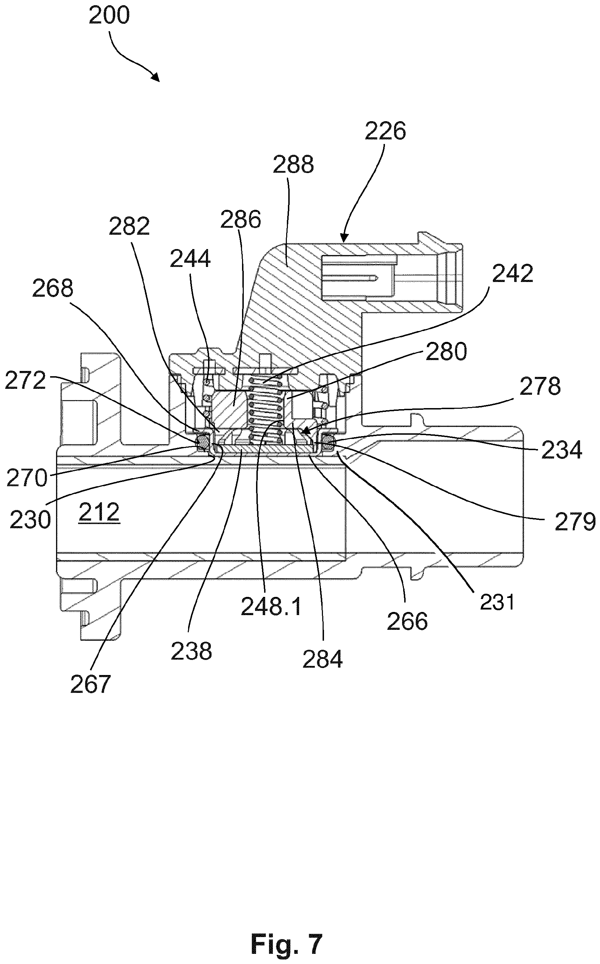

A third embodiment of blowby heater 210 is shown in Figs 6 and 7. This variant uses a heater stack similar to that of the second variant and essentially differs by the arrangement of the contact springs. Same reference signs are used for same or similar elements, augmented by 100.

The blowby heater 210 hence comprises a conduit 212 accommodated in an inner passage of a plastic body 214, with the body 214 further comprising a heater container 218 defining a cavity for the heater stack 222.

The heater stack 222 comprises a cup-shaped heat transfer member 232 mounted with an elastic seal ring 234 in the orifice 230 of the heater container 218, so that the bottom wall of the heat transfer member 232 is in contact with the conduit 212. A heater plate 238 is placed inside the heat transfer member 232. In the assembled state, the cup-shaped transfer member 132 with seal ring 134 sealably closes the orifice 130 at the bottom side of the cavity.

The use of a cup-shaped heat transfer member 232 has the same benefits as explained in the previous embodiment.

Electric power is transmitted from the connector 226 to the heater stack 222 by means of two concentric contact springs 242, 244 cooperating with a guide element 264.

The guide element 264 comprises a disk 284 having a lower side facing the heat member 238 and an upper side facing the connector 226. The lower disk side defines a cavity 278 delimited by a circumferential border 279 extending downwardly from the disk edge. The border 279 here includes a number of openings that are circumferentially distributed and thus forms a crenellation pattern, although it could be continuous. The resulting tabs are designated 282. Border 279 is dimensioned such that it can fit inside the cup member 232, whereas the heating member 238 can fit inside cavity 278.

Disk 284 has a central bore 284.1 and a guide cylinder 280 extends from the upper side in axial continuation thereof. A plurality of vertical fins 286 extend radially from the outer wall of cylinder 280 to the peripheral edge of disk 284.

As will be understood, the guide element 264 allows for the positioning and insulation of the heater element 238, as well as for guiding the springs 242 and 244.

As better seen in Fig.7, in the assembled configuration, the tabs 282 rest against the bottom wall 266 of the heat transfer member 232, located radially between the peripheral wall 267 of the heat transfer member 232 and the peripheral edge of the heater plate 238. The axial length of the tabs 282 is sufficient to leave a space between the disk 284 and the heater plate 238.

The first spring 242 is inserted through the guiding cylinder 280 to rest at its lower end against the heater plate 238, while it is connected at its upper end to a pole in the connector 226. The second spring 244 is arranged to surround the guide element 264, being maintained in position by disk 284 and fins 286. Second spring 244 has a diameter matching that of the outwardly bent upper edge 268 of the cup-shaped heat transfer member 232 and rests against the latter without touching the heater plate 238.

Finally, the connector 226 sealingly closes the cavity 220 and exerts a compressive force on the springs 242 and 244, hence maintaining the heater stack 222 in place.

## Claims

1. Heater device (100; 200), in particular for crankcase fluid, comprising:
a conduit (112, 212) for a fluid to be heated;
a plastic body (114, 214) with a passage defining an inner space in which the conduit is accommodated, said body (114, 214) comprising a heater container (118, 218) defining a cavity (120, 220) in which a heater stack with heater plate (138, 238) (122, 222) is arranged;
wherein the cavity has an aperture (124, 224) allowing insertion of said heater stack, said aperture being closed by a removable connector (126, 226); and
wherein the heater stack is arranged in said cavity in thermal transfer with said conduit to heat-up the latter when energized by means of power provided through poles integrated in said connector;
said heater stack comprises a heat transfer member (32; 132, 232) arranged in an orifice (30; 130, 230) of said heater container to be in direct contact with said conduit; and a seal ring (34; 134, 234) is arranged at the interface between said heat transfer member and said orifice (30; 130, 230) to sealably close the cavity;
**characterized in that**
said heater stack (122, 222) includes a cup-shaped heat transfer member (132, 232) and said heater plate (138, 238) is located inside said cup-shaped heat transfer member;
said cup-shaped heat transfer member has a bottom wall (166, 266) in contact with said conduit and an outwardly bent upper edge (168, 268); and
said seal ring (134) is arranged around said cup-shaped heat transfer member below said upper edge.

2. Heater device according to claim 1, wherein the heat transfer member is made from a material having a better thermal conductivity than the plastic body, preferably a thermal conductivity of at least 100 W/(m.K) .

3. Heater device according to claim 2, wherein the heat transfer member is made from metal, in particular from aluminum or aluminum alloy, copper or copper alloy, or brass.

4. Heater device according to claim 1, 2 or 3, wherein said heat transfer member is in contact with a flattened wall portion of said conduit.

5. Heater device according to any one of the preceding claims, wherein said heater stack includes a PTC heater plate.

6. Heater device according to any one of the preceding claims, wherein said orifice (130, 230) is surrounded by an annular sealing surface (170, 270) configured for receiving said seal ring (134, 234) when said cup-shaped heat transfer member (132, 232) is mounted therein, said seal ring being compressed in between said sealing surface (170, 270) and said upper edge (168, 268), in order to cause radial expansion of said seal ring against an annular wall (172, 272) surrounding said sealing surface.

7. Heater device according to any one of the preceding claims, wherein a first spring (142, 242) provides an electrical link between a first pole of said connector and said heater stack, while pressing the latter towards said conduit; and a second spring (144, 244) is electrically linked with a second pole of said connector and presses against said outwardly bent upper edge (168, 268) of said cup-shaped heat transfer member without touching said heater plate.

8. Heater device according to claim 7, wherein said second spring (244) surrounds said first spring (242) and has a diameter adapted to be in contact with substantially the whole circumference of the bent upper edge (268), said springs being guided by means of a guiding member (264) comprising:
a disk (284) with a peripheral border (279) fitting inside said cup-shaped heat transfer member (232) and forming a cavity (278) accommodating said heater plate (238),
a bore (284.1) and preferably an cylinder (280) extending opposite said cavity (278) in axial continuation of said bore; and
wherein said first spring (242) is inserted through said cylinder (280) and bore (284.1) to press against said heater plate, whereas said second spring (244) is fitted around said guiding member (264) to press against said upper edge (268).

9. Heater device according to any one of the preceding claims, wherein the body (14; 114) is a molded part fitted over said conduit or said body is overmolded on said conduit.

10. A method of manufacturing a heater device comprising:
providing a conduit accommodated in a plastic body, said body comprising a heater container defining a cavity for a heater stack, said cavity having an aperture and an orifice opening on said conduit;
arranging a heater stack in said heater container through said aperture, wherein said heater stack includes a heater plate and a heat transfer member positioned in said orifice in direct contact with said conduit, and wherein a seal ring is arranged at the interface between said heat transfer member and said orifice to sealably close said cavity, wherein said heat transfer member is cup-shaped and said heater plate is located inside said cup-shaped heat transfer member, said cup-shaped heat transfer member has a bottom wall in contact with said conduit and an outwardly bent upper edge; and said seal ring is arranged around said cup-shaped heat transfer member below said upper edge; and
closing said cavity by means of a connector mounted on said aperture, said connector comprising poles to supply power in order to energize said heater stack.

## Patentansprüche

1. Heizungsvorrichtung (100; 200), insbesondere für eine Kurbelgehäuseflüssigkeit, Folgendes umfassend:
eine Leitung (112, 212) für eine zu erhitzende Flüssigkeit:
einen Körper (114, 214) mit einem Durchlass, das einen Innenraum definiert, in dem die Leitung untergebracht ist, wobei das Gehäuse (114, 214) einen Heizungsbehälter (118, 218) umfasst, der einen Hohlraum (120, 220) definiert, in dem ein Heizungsstapel mit Heizungsplatte (138, 238) (122, 222) angeordnet ist;
wobei der Hohlraum eine Öffnung (124, 224) aufweist, die das Einführen des Heizungsstapels erlaubt, wobei die Öffnung durch einen abnehmbaren Stecker (126, 226) verschlossen wird; und
wobei der Heizungsstapel in dem Hohlraum in Wärmeübertragung mit der Leitung angeordnet ist, um letztere aufzuheizen, wenn er anhand von einer Leistung mit Energie versorgt wird, die durch Pole bereitgestellt wird, die in den Stecker integriert sind;
wobei der Heizungsstapel ein Wärmeübertragungsglied (32; 132, 232) umfasst, das in einem Durchgang (30; 130, 230) des Heizungsbehälters angeordnet ist, um in direktem Kontakt mit der Leitung zu sein; und ein Dichtungsring (34; 134, 234) an der Schnittstelle zwischen dem Wärmeübertragungsglied und dem Durchgang (30; 130, 230) angeordnet ist, um den Hohlraum dicht zu verschließen;
**dadurch gekennzeichnet, dass**
der Heizungsstapel (122, 222) ein kelchförmiges Wärmeübertragungsglied (132, 232) beinhaltet und die Heizungsplatte (138, 238) innerhalb des kelchförmigen Wärmeübertragungsglieds gelegen ist;
wobei das kelchförmige Wärmeübertragungsglied eine Bodenwand (166, 266) in Kontakt mit der Leitung aufweist, und eine nach außen gebogener Oberkante (168, 268); und der Dichtungsring (134) um das kelchförmige Wärmeübertragungsglied herum unter der Oberkante angeordnet ist.

2. Heizungsvorrichtung nach Anspruch 1, wobei das Wärmeübertragungsglied aus einem Material gefertigt ist, das eine bessere Wärmeleitfähigkeit aufweist, als der Körper, vorzugsweise eine Wärmeleitfähigkeit von mindestens 100 W/(m.K).

3. Heizungsvorrichtung nach Anspruch 2, wobei das Wärmeübertragungsglied aus Metall, insbesondere aus Aluminium oder einer Aluminiumlegierung, Kupfer oder einer Kupferlegierung, oder Messing gefertigt ist.

4. Heizungsvorrichtung nach Anspruch 1, 2 oder 3, wobei das Wärmeübertragungsglied in Kontakt mit einem abgeflachten Wandabschnitt der Leitung ist.

5. Heizungsvorrichtung nach einem der vorstehenden Ansprüche, wobei der Heizungsstapel eine PTC-Heizungsplatte beinhaltet.

6. Heizungsvorrichtung nach einem der vorstehenden Ansprüche, wobei der Durchgang (130, 230) von einer ringförmigen Dichtungsoberfläche (170, 270) umgeben ist, die zum Aufnehmen des Dichtungsrings (134, 234) konfiguriert ist, wenn das kelchförmige Wärmeübertragungsglied (132, 232) darin angebracht ist, wobei der Dichtungsring zwischen der Dichtungsoberfläche (170, 270) und der Oberkante (168, 268) zusammengedrückt wird, um eine radiale Ausdehnung des Dichtungsrings gegen eine ringförmige Wand (172, 272) zu bewirken, die die Dichtungsoberfläche umgibt.

7. Heizungsvorrichtung nach einem der vorstehenden Ansprüche, wobei eine erste Feder (142, 242) eine elektrische Verbindung zwischen einem ersten Pol des Steckers und dem Heizungsstapel bereitstellt, während sie letzteren zur Leitung drückt; und eine zweite Feder (144, 244) elektrisch mit einem zweiten Pol des Steckers verbunden ist und gegen die nach außen gebogene Oberkannte (168, 268) des kelchförmigen Wärmeübertragungsglieds drückt, ohne die Heizungsplatte zu berühren.

8. Heizungsvorrichtung nach Anspruch 7, wobei die zweite Feder (244) die erste Feder (242) umgibt und einen Durchmesser aufweist, der angepasst ist, um in Kontakt mit im Wesentlichen dem gesamten Umfang der gebogenen Oberkante (268) zu sein, wobei die Federn anhand eines Führungsgliedes (264) geführt werden, Folgendes umfassend:
eine Scheibe (284) mit einem umlaufenden Rand (279), der innerhalb des kelchförmigen Wärmeübertragungsglieds (232) anliegt und einen Hohlraum (278) bildet, der die Heizungsplatte (238) aufnimmt,
eine Bohrung (284.1) und vorzugsweise einen Zylinder (280), der sich entgegengesetzt zum Hohlraum (278) in axialer Fortsetzung der Bohrung erstreckt, und
wobei die erste Feder (242) durch den Zylinder (280) und die Bohrung (284.1) hindurch eingeführt wird, um gegen die Heizungsplatte zu drücken, währenddessen die zweite Feder (244) um das Führungsglied (264) herum anliegt, um gegen die Oberkante (268) zu drücken.

9. Heizungsvorrichtung nach einem der vorstehenden Ansprüche, wobei das Gehäuse (14; 114) ein Formteil ist, das über der Leitung angebaut ist, oder das Gehäuse auf der Leitung umspritzt ist.

10. Verfahren zur Herstellung einer Heizungsvorrichtung, Folgendes umfassend:
Bereitstellen einer Leitung, die in einem Körper untergebracht ist, wobei das Gehäuse einen Heizungsbehälter umfasst, der einen Hohlraum für einen Heizungsstapel definiert, wobei der Hohlraum eine Öffnung und einen Durchgang aufweist, die sich zur Leitung öffnet;
Anordnen eines Heizungsstapels in dem Heizungsbehälter durch die Öffnung hindurch, wobei der Heizungsstapel eine Heizungsplatte und ein Wärmeübertragungsglied beinhaltet, das in der Öffnung in direktem Kontakt mit der Leitung positioniert ist, und wobei ein Dichtungsring an der Schnittstelle zwischen dem Wärmeübertragungsglied und dem Durchgang angeordnet ist, um den Hohlraum dicht zu schließen, wobei das Wärmeübertragungsglied kelchförmig ist und die Heizungsplatte innerhalb des kelchförmigen Wärmeübertragungsglieds gelegen ist, wobei das kelchförmige Wärmeübertragungsglied eine Bodenwand in Kontakt mit der Leitung, und eine nach außen gebogene Oberkante aufweist: und der Dichtungsring um das kelchförmige Wärmeübertragungsglied herum unter der Oberkante angeordnet ist; und
Schließen des Hohlraums anhand eines Steckers, der an dem Durchgang angebracht ist, wobei der Stecker Pole zur Leistungszuführung umfasst, um den Heizungsstapel mit Energie zu versorgen.

## Revendications

1. Dispositif de chauffage (100 ; 200), en particulier pour un fluide de carter, comprenant :
une conduite (112 ; 212) pour un fluide devant être chauffé ;
un corps plastique (114 ; 214) avec un passage définissant un espace intérieur dans lequel la conduite est reçue, ledit corps (114; 214) comprenant un réceptacle (118 ; 218) de chauffe définissant une cavité (120 ; 220) dans laquelle un empilement chauffant (122 ; 222) avec une plaque (138 ; 238) de chauffe est agencé ;
dans lequel la cavité a une ouverture (124 ; 224) permettant l'insertion dudit empilement chauffant, ladite ouverture étant fermée par un connecteur amovible (126 ; 226) ; et
dans lequel l'empilement chauffant est agencé dans ladite cavité en transfert thermique avec ladite conduite pour chauffer cette dernière lorsqu'il est mis sous tension au moyen d'une énergie électrique fournie par l'intermédiaire de pôles intégrés dans ledit connecteur ;
ledit empilement chauffant comprend un élément (32; 132, 232) de transfert de chaleur agencé dans un orifice (30 ; 130, 230) dudit réceptacle de chauffe pour être en contact direct avec ladite conduite ; et une bague d'étanchéité (34 ; 134, 234) est agencée à l'interface entre ledit élément de transfert de chaleur et ledit orifice (30 ; 130, 230) pour fermer de manière étanche la cavité ;
**caractérisé en ce que** ledit empilement chauffant (122, 222) inclut un élément (132, 232) de transfert de chaleur en forme de coupelle et ladite plaque (138, 238) de chauffe est située à l'intérieur dudit élément de transfert de chaleur en forme de coupelle ;
ledit élément de transfert de chaleur en forme de coupelle a une paroi de fond (166, 266) en contact avec ladite conduite et un bord supérieur (168, 268) replié vers l'extérieur ; et
ladite bague d'étanchéité (134) est agencée autour dudit élément de transfert de chaleur en forme de coupelle en-dessous dudit bord supérieur.

2. Dispositif de chauffage selon la revendication 1, dans lequel l'élément de transfert de chaleur est constitué d'un matériau ayant une conductivité thermique meilleure que le corps plastique, préférablement une conductivité thermique d'au moins 100 W/(m.K).

3. Dispositif de chauffage selon la revendication 2, dans lequel l'élément de transfert de chaleur est constitué de métal, en particulier d'aluminium ou d'un alliage d'aluminium, de cuivre ou d'un alliage de cuivre, ou de laiton.

4. Dispositif de chauffage selon la revendication 1, 2 ou 3, dans lequel ledit élément de transfert de chaleur est en contact avec une partie de paroi aplatie de ladite conduite.

5. Dispositif de chauffage selon l'une quelconque des revendications précédentes, dans lequel ledit empilement chauffant inclut une plaque de chauffe CTP.

6. Dispositif de chauffage selon l'une quelconque des revendications précédentes, dans lequel ledit orifice (130, 230) est entouré par une surface d'étanchéité annulaire (170, 270) configurée pour recevoir ladite bague d'étanchéité (134, 234) lorsque ledit élément (132, 232) de transfert de chaleur en forme de coupelle est monté dans celui-ci, ladite bague d'étanchéité étant compressée entre ladite surface d'étanchéité (170, 270) et ledit bord supérieur (168, 268), afin de causer une expansion radiale de ladite bague d'étanchéité contre une paroi annulaire (172, 272) entourant ladite surface d'étanchéité.

7. Dispositif de chauffage selon l'une quelconque des revendications précédentes, dans lequel un premier ressort (142, 242) fournit une liaison électrique entre un premier pôle dudit connecteur et ledit empilement chauffant, tout en pressant ce dernier vers ladite conduite ; et un deuxième ressort (144, 244) est électriquement lié avec un deuxième pôle dudit connecteur et presse contre ledit bord supérieur (168, 268) replié vers l'extérieur dudit élément de transfert de chaleur en forme de coupelle sans toucher ladite plaque de chauffe.

8. Dispositif de chauffage selon la revendication 7, dans lequel ledit deuxième ressort (244) entoure ledit premier ressort (242) et a un diamètre adapté à être en contact avec sensiblement la totalité de la circonférence du bord supérieur (268) replié, lesdits ressorts étant guidés au moyen d'un élément (264) de guidage comprenant :
un disque (284) avec une bordure périphérique (279) s'ajustant à l'intérieur dudit élément (232) de transfert de chaleur en forme de coupelle et formant une cavité (278) recevant ladite plaque (238) de chauffe,
un alésage (284.1) et préférablement un cylindre (280) s'étendant opposé à ladite cavité (278) en continuation axiale dudit alésage ; et
dans lequel ledit premier ressort (242) est inséré à travers lesdits cylindre (280) et alésage (284.1) pour presser contre ladite plaque de chauffe, tandis que ledit deuxième ressort (244) est ajusté autour dudit élément (264) de guidage pour presser contre ledit bord supérieur (268).

9. Dispositif de chauffage selon l'une quelconque des revendications précédentes, dans lequel le corps (14 ; 114) est une pièce moulée ajustée par-dessus ladite conduite ou ledit corps est surmoulé sur ladite conduite.

10. Procédé de fabrication d'un dispositif de chauffage comprenant :
la fourniture d'une conduite reçue dans un corps plastique, ledit corps comprenant un réceptacle de chauffe définissant une cavité pour un empilement chauffant, ladite cavité ayant une ouverture et un orifice ouvrant sur ladite conduite ;
l'agencement d'un empilement chauffant dans ledit réceptacle de chauffe à travers ladite ouverture, dans lequel ledit empilement chauffant inclut une plaque de chauffe et un élément de transfert de chaleur positionné dans ledit orifice en contact direct avec ladite conduite, et dans lequel une bague d'étanchéité est agencée à l'interface entre ledit élément de transfert de chaleur et ledit orifice pour fermer de manière étanche la cavité, dans lequel ledit élément de transfert de chaleur est en forme de coupelle et ladite plaque de chauffe est située à l'intérieur dudit élément de transfert de chaleur en forme de coupelle, ledit élément de transfert de chaleur en forme de coupelle a une paroi de fond en contact avec ladite conduite et un bord supérieur replié vers l'extérieur ; et ladite bague d'étanchéité est agencée autour dudit élément de transfert de chaleur en forme de coupelle en-dessous dudit bord supérieur ; et
la fermeture de ladite cavité au moyen d'un connecteur monté sur ladite ouverture, ledit connecteur comprenant des pôles pour amener une énergie électrique afin de mettre sous tension ledit empilement chauffant.
